# EUROPEAN PATENT SPECIFICATION

(11) **EP 3 200 437 B1**
(45) Date of publication and mention of the grant of the patent: **24.02.2021**
(21) Application number: 17153695.6
(22) Date of filing: 30.01.2017
(51) Int. Cl.: H04M 3/42, H04M 3/436

(54) **METHOD AND SYSTEM FOR PROVIDING CALLER INFORMATION**
VERFAHREN UND SYSTEM ZUR BEREITSTELLUNG VON CALLER INFORMATIONEN
PROCÉDÉ ET SYSTÈME POUR FOURNIR DES INFORMATIONS D'APPEL

(30) Priority: 28.01.2016 US 201615009187; 10.02.2016 US 201615040756
(43) Date of publication of application: 02.08.2017
(73) Proprietor: Mitel Networks Corporation, Ottawa, ON K2K 2W7 (CA)
(72) Inventor: Hillier, Katayoun, Ottawa, Ontario KT2 0EB (CA); Hillier, Peter, Ottawa, Ontario KT2 0EB (CA)
(74) Representative: McDougall, James

(56) References cited:
- EP-A1- 2 107 775
- EP-A1- 2 600 597
- EP-A2- 1 211 875
- US-A1- 2005 287 997

## Description

### FIELD

This invention relates generally to communication systems, and more particularly to a method and system of providing caller information.

### BACKGROUND

Caller identification information allows a call recipient to view caller information. The recipient can view the caller identification information and decide, for example, whether to answer a call, or not, based on the caller identification information.

Typically, caller identification information includes a number of the caller and a name of the caller. Caller identification information can be provided by a call routing engine-e.g., based on account provisioning information. Additionally or alternatively, in some cases, a user (caller) can provide their caller identification information. In these cases, a user can enter a name to be displayed on call recipients' devices.

When a language used by a caller differs from a language used by a call recipient, particularly when an alphabet used by the caller's device or, e.g., the caller's routing engine or the like, differs from an alphabet used by the recipient's device, the caller identification information may not be displayed in a manner that is discernible to the call recipient. The caller identification information may not properly display on the recipient's device and/or may be displayed using characters that are not familiar to the call recipient. As a result, the recipient may not be able to identify the caller and/or determine a context of a call.

Some systems may allow a user (recipient) to store information, such as a caller's name, associated with a phone number on a user's device. However, such systems cannot provide caller identification information for callers not associated with information already stored on the user/recipient device, and such systems require input by the recipient. Other systems do not allow a user/recipient to modify caller identification information. Accordingly, improved systems and methods that allow a recipient to identify a caller are desired.

US 2005/287997 discloses SIP signalling messages sent by a calling party that includes information associated with one or more customized caller IDs. EP 1211875 discloses a caller profile system and service to establish a caller profile to be delivered to called parties.

### BRIEF DESCRIPTION OF THE DRAWING FIGURES

The scope of the present invention is defined by the appended independent claims. Preferred embodiment are defined by the appended dependent claims.
FIG. 1 illustrates a communication system in accordance with exemplary embodiments of the disclosure.
FIG. 2 illustrates a communication method in accordance with exemplary embodiments of the disclosure.
FIG. 3 illustrates another communication method in accordance with further exemplary embodiments of the disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present disclosure.

### DETAILED DESCRIPTION

The description of various embodiments of the present disclosure provided below is merely exemplary and is intended for purposes of illustration only; the following description is not intended to limit the scope of an invention disclosed herein. Moreover, recitation of multiple embodiments having stated features is not intended to exclude other embodiments having additional features or other embodiments incorporating different combinations of the stated features.

Exemplary embodiments of the disclosure are described herein in terms of various functional components and various steps. It should be appreciated that such functional components may be realized by any number of hardware or structural components configured to perform the specified functions. Further, it should be noted that while various components may be suitably coupled or connected to other components within exemplary systems, such connections and couplings can be realized by direct connection between components, or by connection through other components and devices located therebetween. Similarly, unless otherwise noted, illustrative methods can include additional steps and/or steps that are performed in a different order.

Exemplary systems and methods are described below in connection with voice-over-Internet protocols (VoIP), and in some cases with session initial protocol (SIP). However, unless otherwise noted, the disclosure is not limited to such examples.

In accordance with various embodiments of the disclosure, improved methods and systems for providing caller information on a call recipient's device are disclosed. As discussed in more detail below, exemplary methods and systems can be used to provide audio information and/or translated (literally or phonetically) caller information to a call recipient's device. In accordance with illustrate examples, the text can be displayed using the language and alphabet of the call recipient's device-even if the language and/or alphabet used by a caller's device differs from the language and/or alphabet used by a recipient's device.

Exemplary methods of providing caller information include initiating a call between a first device and a second device, providing file location information corresponding to audio information during a call setup between the first device and the second device, using the file location information, retrieving the audio information, and performing one or more of playing the audio information and displaying information on the second device. The file location can be, for example, on the first device or on a server. The audio information can be pre-recorded, using, e.g., the first device. The audio information can then be stored on, for example, the first device or a server. The audio information can be translated into text, such that the text is displayed on the second device using the alphabet used on the second device, which may be different from the alphabet used on the first device. Thus, a caller's name and/or other information can be displayed using the recipient's device alphabet, even if the recipient's device alphabet differs from the caller device's alphabet.

In accordance with yet further embodiments of the disclosure, methods of providing caller information include initiating a call between a first device and a second device, providing file location information corresponding to audio information recorded in a first language using the first device, translating the audio information to a second language, and providing translated information in the second language on the second device. The translated information can include text that is transcribed literally and/or phonetically. The file location information can include a URL address for the audio information. The URL information can correspond to the first device, to a server, or the like.

In accordance with yet additional exemplary embodiments of the disclosure, a system for providing caller information includes a communication network, a first device connected to the communication network, and a second device coupled to the communication network, wherein file location information regarding audio information is provided to the second device during a call setup between the first device and the second device, and wherein the second device performs one or more of displaying translated text corresponding to the audio information and playing the audio information. The system can additionally include a server or the like to store the audio information. Additionally or alternatively, the system can include a server to translate and/or transcribe audio information in a first language to text information (or an image including text) in a second language.

In accordance with further aspects, a computer readable medium having computer readable code embodied therein for controlling a device to perform the steps of providing caller information includes initiating a call between a first device and a second device, providing file location information corresponding to audio information during a call setup between the first device and the second device, using the file location information, retrieving the audio information, and performing one or more of playing the audio information and displaying information on the second device is provided. In accordance with other aspects, a computer readable medium having computer readable code embodied therein for controlling a device to perform the steps of initiating a call between a first device and a second device, providing file location information corresponding to audio information recorded in a first language, translating the audio information to a second language, and providing translated information in the second language on the second device is provided.

In accordance with various aspects of the exemplary embodiments described herein, the caller identification information can be provided as contextual information or as part of contextual information to a user's device, such that the contextual information can be provided (e.g., in text, image, or audio format) along with other caller identification information.

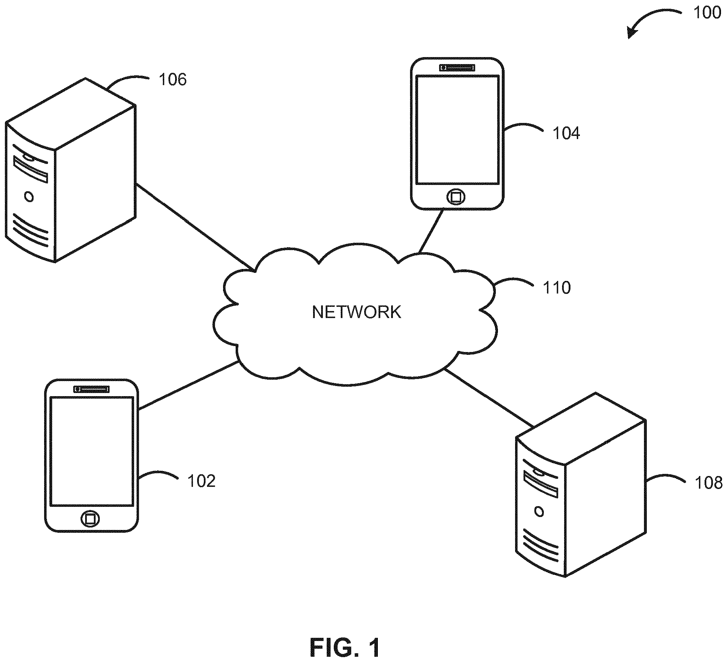

Turning to FIG. 1, a system 100 for providing caller information is illustrated. System 100 includes a first user device 102, a second user device 104, and network 110. System 100 can also optionally include one or more servers 106, 108. Although illustrated with two devices 102, 104, one network 110, and two servers 106, 108, it will be appreciated that systems in accordance with this disclosure can include any suitable number of devices, networks, servers, and/or other network devices.

Devices 102, 104 can include any suitable device with wired and/or wireless communication features. For example, user devices 102, 104 can include a wearable device, a tablet computer, a smart phone, a personal (e.g., laptop or desktop) computer, a streaming device, such as a game console or other media streaming device, such as Roku, Amazon Fire TV, or the like, a mobile station, a subscriber station, a mobile unit, a subscriber unit, a wireless unit, a mobile device, a wireless device, a wireless communication device, an access terminal, a mobile terminal, a handset, a user agent, or other suitable device.

In accordance with various embodiments of the disclosure, one or more of devices 102, 104 include a client to, for example, perform various functions or steps as described herein. As used herein, client can refer to a downloadable OTT application, a native phone application, a soft phone or a browser-based client. The client can, for example, present caller information that has been, for example, transcribed and translated-e.g., from one language using a first alphabet to a second language using a second alphabet. Additionally or alternatively, the client can allow a user to record caller information, such as the caller's name and/or play audio information (e.g., the caller's recorded name) upon a call setup (e.g., in addition to or in lieu of a call ring). In accordance with further exemplary embodiments, the client can translate caller information-e.g., during a call setup. Exemplary clients can allow a user to select a preferred language and/or alphabet for display of caller information received, for example, during a call setup. The client can also provide a suitable graphical user interface (GUI) that can allow playing the audio information (on demand or automatically) and/or displaying the text associated with the caller information. Additional exemplary client functions are described below.

Servers 106, 108 can be any suitable device capable of receiving information from one or more of devices 102, 104, storing the information, and allowing access to the information from one or more of devices 102, 104 and/or other devices and/or transmitting the information to one or more devices. By way of particular examples, servers 106, 108 can be stand-alone servers, private branch exchange (PBX) servers, unified communications servers, part of a cloud service, or the like.

In accordance with exemplary embodiments of the disclosure, server 106 is configured to store audio information that corresponds to caller information (e.g., caller identification information). By way of example, server 106 can store recordings (e.g., in a user's/caller's voice) that can then be transmitted to a call recipient's device-e.g., during a call setup. Alternatively, as discussed in more detail below, such audio information can be stored on the caller's device.

In accordance with further illustrated examples, server 108 is configured to transcribe audio information into text. The translated text can be in a language and using an alphabet of the call recipient's device. As noted above, the translation and transcription of audio information can be literal or phonetic. Although illustrated separately, servers 106, 108 can form part of another system and/or the functions of servers 106/108 can be performed by a single server.

Network 110 can include or be a local area network (LAN), a wide area network, a personal area network, a campus area network, a metropolitan area network, a global area network, or the like. Network 110 can be coupled to other networks, such as a private branch exchange (PBX) network, to other devices typically coupled to a network, and/or to the Internet.

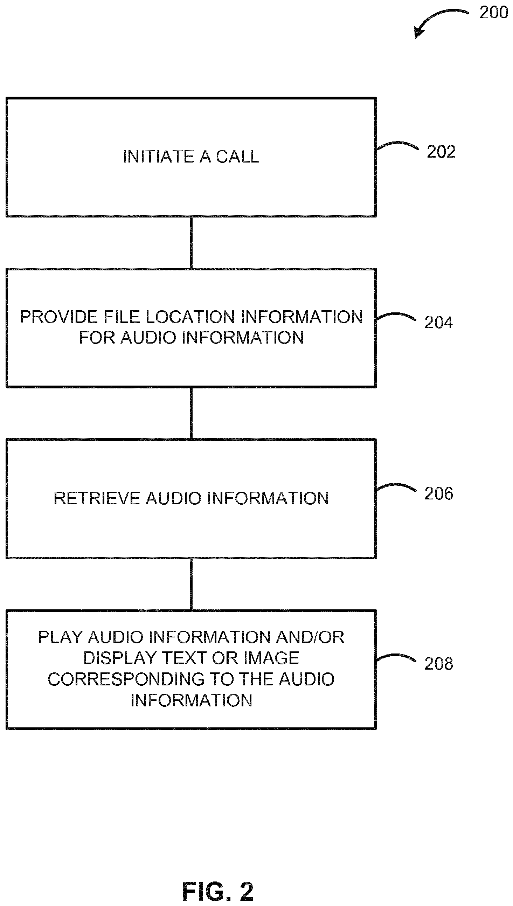

FIG. 2 illustrates a method 200 in accordance with exemplary embodiments of the disclosure. Method 200 includes the steps of initiating a call (step 202), providing file location information for audio information (step 204), retrieving the audio information (step 206), and playing audio information and/or displaying information (step 206).

Step 202 includes initiating a call (e.g., a telephone call, a video call, or a collaboration call) between two or more devices. By way of example, step 202 can include initiating a VoIP call, such as a SIP call.

In accordance with some examples of the disclosure, prior to or at the beginning of step 202, a user (the caller) can use a device (e.g., use a client on the caller's device or another device) to audio record caller information, such as a caller's name, caller's company, information about what the call is about, context information, other caller information, and the like. Examples of how to generate context-aware information are disclosed in U.S. Application Serial No. 15/009,187, entitled METHOD AND SYSTEM OF PROVIDING CONTEXT AWARE ANNOUNCEMENTS, and filed January 28, 2016. The audio information can be stored on the caller's device or elsewhere, such as on server 106. The audio recording can be a one-time or limited-time setup, wherein the caller information is stored. Additionally or alternatively, caller information can be recorded when a call is made. For example, a caller's name may need to be recorded only once or periodically and caller information could include the recorded name alone or with additional information that is made, for example, on a per-call basis. Alternatively, a caller could use a client to record caller information when it is thought that there might be a translation issue, and not use such service if a translation issue is not expected.

The audio information can be stored as an uncompressed (e.g., .wav) file or a compressed (e.g., MPEG-4, or MP3) file or any other suitable file format. The audio information can be recorded by the caller and/or provided by an operator. The information can be recorded and stored in one or more languages. When the information is stored on a remote device, such as a server, the information can be stored along with the corresponding directory number.

During step 204, file location information (e.g., an IP or URL address) corresponding to caller information is provided to a recipient's device. In accordance with various examples of the disclosure, the file location information is provided as part of a call setup. For example, the file location information can be provided as part of a SIP header. The location information can include a location of a server, such as server 106, a location of the caller's device, or another location of a suitable server or device.

A second device (e.g., device 104) can retrieve the audio information during step 206-e.g., using file location information that is transmitted to recipient's device during a call setup. As noted above, the file location can be the caller's device, a server, or another device. When the audio file is on the caller's device, the audio information can directly stream from the caller's device to the recipient's device-e.g., using SIP. Alternatively, the audio file can be transmitted as part of a call setup. Although separately illustrated, steps 202-206 can be part of a call setup process.

A call recipient can play the audio file-e.g., using a client, can have displayed text or an image corresponding to the caller information (e.g., translated text and/or non-translated text corresponding to the audio information), or both during step 208. In accordance with some embodiments of the disclosure, the recipient's device performs translation of the audio file into a language used by the recipient's device.

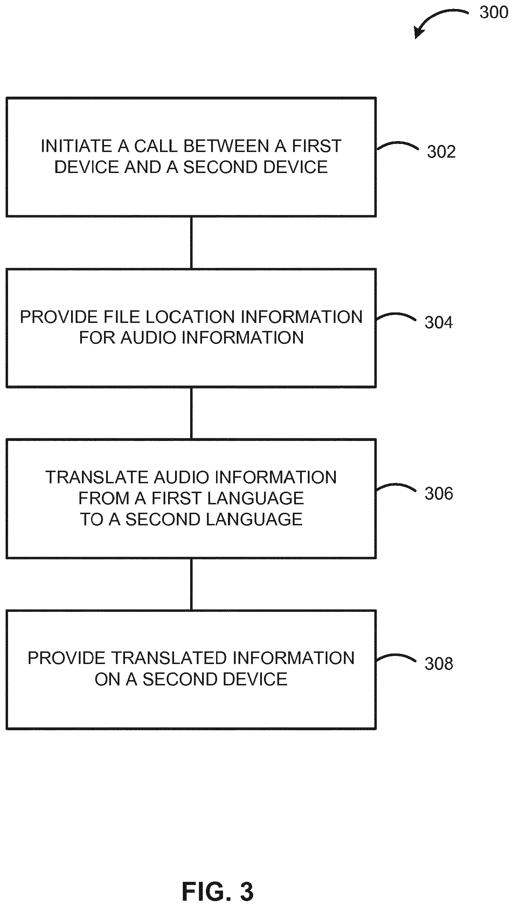

FIG. 3 illustrates another method 300 of providing caller information in accordance with further examples of the disclosure. Method 300 includes the steps of initiating a call between two or more devices (step 302), providing file location information for audio information that includes caller information (step 304), translating the audio information from a first language to a second language (step 306), and providing (e.g., displaying) the translated information on a recipient's device (step 308).

Steps 302 and 304 can be the same or similar to steps 202 and 204, described above. Step 306 includes translating the audio information. The translation and/or transcription is performed at the recipient's device.

Once the audio information is translated and transcribed, the translated/transcribed information is displayed, during step 308, on a recipient's device. The information that is displayed can include caller identification (e.g., name, company, or the like) information. The information is displayed as part of a call setup.

## Claims

1. A method of providing caller information, the method comprising the steps of:
initiating (202) a call between a first device (102) and a second device (104),
wherein the first device (102) is configured to display text information using a first alphabet and the second device (104) is configured to display text information using a second alphabet;
providing (204), to the second device (104), file location information corresponding to audio caller information during a call setup between the first device (102) and the second device (104);
transcribing, at the second device (104), the audio caller information to text information using the second alphabet;
using (206) the file location information, retrieving, by the second device (104), the audio caller information;
playing the audio caller information: and
displaying the transcribed text information on the second device (104) during the call setup.

2. The method of claim 1, wherein the file location is on the first device (102).

3. The method of claim 1, wherein the file location is on the server (106, 108).

4. The method of any preceding claim, further comprising a step of recording the audio caller information using the first device (102).

5. The method of any preceding claim, wherein the file location information comprises a URL address.

6. The method of any preceding claim, wherein the audio caller information comprises a user's name.

7. The method of any preceding claim, wherein the first device (102) is configured to display information in a first language and the second device (104) is configured to display information in a second language.

8. A system for providing caller information, the system comprising:
a first device (102);
a second device (104);
wherein a call is initiated between the first device and a second device;
wherein the first device (102) is configured to display information using a first alphabet and the second device (104) is configured to display information using a second alphabet;
wherein the second device (104) is configured to be provided with file location information corresponding to audio caller information during a call setup between the first device (102) and the second device (104);
wherein the audio caller information is transcribed to text information using the second alphabet, wherein the transcription is performed at the second device (104);
wherein the second device is configured to use the file location information to retrieve the audio caller information; and
wherein the second device is configured to:
play the audio caller information; and
display the transcribed text information during the call setup.

## Patentansprüche

1. Verfahren zum Bereitstellen von Anruferinformationen, wobei das Verfahren die folgenden Schritte beinhaltet:
Einleiten (202) eines Anrufs zwischen einem ersten Gerät (102) und einem zweiten Gerät (104),
wobei das erste Gerät (102) zum Anzeigen von Textinformationen unter Verwendung einer ersten Alphabets und das zweite Gerät (104) zum Anzeigen von Textinformationen unter Verwendung eines zweiten Alphabets konfiguriert ist;
Bereitstellen (204), dem zweiten Gerät (104), von Dateiortinformationen, die Audio-Anruferinformationen entsprechen, während eines Rufaufbaus zwischen dem ersten Gerät (102) und dem zweiten Gerät (104);
Transkribieren, am zweiten Gerät (104), der Audio-Anruferinformationen in Textinformationen unter Verwendung des zweiten Alphabets;
Abrufen, durch das zweite Gerät (104), der Audio-Anruferinformationen unter Nutzung (206) der Dateiortinformationen;
Abspielen der Audio-Anruferinformationen, und
Anzeigen der transkribierten Textinformationen auf dem zweiten Gerät (104) während des Rufaufbaus.

2. Verfahren nach Anspruch 1, wobei sich die Datei auf dem ersten Gerät (102) befindet.

3. Verfahren nach Anspruch 1, wobei sich die Datei auf dem Server (106, 108) befindet.

4. Verfahren nach einem vorherigen Anspruch, das ferner einen Schritt des Aufzeichnens der Audio-Anruferinformationen mit dem ersten Gerät (102) beinhaltet.

5. Verfahren nach einem vorherigen Anspruch, wobei die Dateiortinformationen eine URL-Adresse umfassen.

6. Verfahren nach einem vorherigen Anspruch, wobei die Audio-Anruferinformationen einen Benutzernamen umfassen.

7. Verfahren nach einem vorherigen Anspruch, wobei das erste Gerät (102) zum Anzeigen von Informationen in einer ersten Sprache und das zweite Gerät (104) zum Anzeigen von Informationen in einer zweiten Sprache konfiguriert ist.

8. System zum Bereitstellen von Anruferinformationen, wobei das System Folgendes umfasst:
ein erstes Gerät (102);
ein zweites Gerät (104);
wobei ein Anruf zwischen dem ersten Gerät und einem zweiten Gerät eingeleitet wird;
wobei das erste Gerät (102) zum Anzeigen von Informationen unter Verwendung eines ersten Alphabets und das zweite Gerät (104) zum Anzeigen von Informationen unter Verwendung eines zweiten Alphabets konfiguriert ist;
wobei das zweite Gerät (104) so konfiguriert ist, dass es während eines Rufaufbaus zwischen dem ersten Gerät (102) und dem zweiten Gerät (104) mit Dateiortinformationen versorgt wird, die Audio-Anruferinformationen entsprechen;
wobei die Audio-Anruferinformationen unter Verwendung des zweiten Alphabets in Textinformationen transkribiert werden, wobei die Transkription am zweiten Gerät (104) durchgeführt wird;
wobei das zweite Gerät zum Benutzen der Dateiortinformationen zum Abrufen der Audio-Anruferinformationen konfiguriert ist; und
wobei das zweite Gerät konfiguriert ist zum:
Abspielen der Audio-Anruferinformationen; und
Anzeigen der transkribierten Textinformationen während des Rufaufbaus.

## Revendications

1. Procédé permettant de fournir des informations d'appelant, le procédé comportant les étapes consistant à :
lancer (202) un appel entre un premier dispositif (102) et un deuxième dispositif (104),
dans lequel le premier dispositif (102) est configuré pour afficher des informations de texte en utilisant un premier alphabet et le deuxième dispositif (104) est configuré pour afficher des informations de texte en utilisant un deuxième alphabet ;
fournir (204), au deuxième dispositif (104), des informations d'emplacement de fichier correspondant à des informations d'appelant audio au cours d'un établissement d'appel entre le premier dispositif (102) et le deuxième dispositif (104) ;
transcrire, au niveau du deuxième dispositif (104), les informations d'appelant audio en informations de texte en utilisant le deuxième alphabet ;
en utilisant (206) les informations d'emplacement de fichier, extraire, par le deuxième dispositif (104), les informations d'appelant audio ;
lire les informations d'appelant audio ; et
afficher les informations de texte transcrites sur le deuxième dispositif (104) au cours de l'établissement d'appel.

2. Procédé selon la revendication 1, dans lequel l'emplacement du fichier est sur le premier dispositif (102).

3. Procédé selon la revendication 1, dans lequel l'emplacement du fichier est sur le serveur (106, 108).

4. Procédé selon l'une quelconque des revendications précédentes, comportant par ailleurs une étape consistant à enregistrer les informations d'appelant audio en utilisant le premier dispositif (102).

5. Procédé selon l'une quelconque des revendications précédentes, dans lequel les informations d'emplacement de fichier comportent une adresse URL.

6. Procédé selon l'une quelconque des revendications précédentes, dans lequel les informations d'appelant audio comportent un nom d'utilisateur.

7. Procédé selon l'une quelconque des revendications précédentes, dans lequel le premier dispositif (102) est configuré pour afficher des informations dans une première langue et le deuxième dispositif (104) est configuré pour afficher des informations dans une deuxième langue.

8. Système permettant de fournir des informations d'appelant, le système comportant :
un premier dispositif (102) ;
un deuxième dispositif (104) ;
dans lequel un appel est lancé entre le premier dispositif et un deuxième dispositif ;
dans lequel le premier dispositif (102) est configuré pour afficher des informations en utilisant un premier alphabet et le deuxième dispositif (104) est configuré pour afficher des informations en utilisant un deuxième alphabet ;
dans lequel le deuxième dispositif (104) est configuré pour recevoir des informations d'emplacement de fichier correspondant à des informations d'appelant audio au cours d'un établissement d'appel entre le premier dispositif (102) et le deuxième dispositif (104) ;
dans lequel les informations d'appelant audio sont transcrites en informations de texte en utilisant le deuxième alphabet,
dans lequel la transcription est effectuée au niveau du deuxième dispositif (104) ;
dans lequel le deuxième dispositif est configuré pour utiliser les informations d'emplacement de fichier pour extraire les informations d'appelant audio ; et
dans lequel le deuxième dispositif est configuré pour :
lire les informations d'appelant audio ; et
afficher les informations de texte transcrites au cours de l'établissement d'appel.
